# EUROPEAN PATENT APPLICATION

(11) **EP 1 821 507 A1**
(43) Date of publication of application: **22.08.2007**
(21) Application number: 05806269.6
(22) Date of filing: 11.11.2005
(51) Int. Cl.: H04M 11/00, H04M 1/2745, H04L 12/66

(54) **COMMUNICATION CONNECTION SUPPORTING METHOD AND SYSTEM, AND PROGRAM OF COMMUNICATION CONNECTION SUPPORTING METHOD**

(30) Priority: 19.11.2004 JP 2004336022
(71) Applicant: SEIKO INSTRUMENTS INC., Chiba-shi, Chiba 261-8507 (JP)
(72) Inventor: MATSUI, Takayuki, Seiko Instruments Inc., Chiba-shi, Chiba 261-8507 (JP); OKAWA, Satoshi, Vodafone K.K, 1056205 (JP); KUSAKARI, Yasunobu, Vodafone K.K., 1056205 (JP); FUKAZAWA, Masanori, Vodafone K.K., 1056205 (JP)
(74) Representative: Cloughley, Peter Andrew
(86) International application number: PCT/JP2005/020743
(87) International publication number: WO 2006/054497

(57) **Abstract**

Data processing means (1) generates APN (Access Point Name) data for causing communication means (10) to perform a dial-up connection, on the basis of a character string inputted as a user name through input means (3). The dial-up connection is performed by the communication means (10) on the basis of the data of at least the user name, the APN and the dial.

## Description

### Technical Field

The present invention relates to communication connection supporting method and system and the like for reducing an input load of a user when communication is performed through a dial-up connection, for example, and more particularly to an access point name (APN).

### Background Art

In general, a processing unit such as a computer performs communication of a signal that includes data (hereinafter, referred to as data signal) with another processing unit through a (regardless of wired or wireless) telecommunication network such as the Internet. In this case, a communication means, such as a modem, for performing conversion of a data signal, control of connection to a telecommunication network, and the like is provided between the processing unit and the telecommunication network (may be incorporated in the processing unit).

Methods of connecting the processing unit (communication means) to the telecommunication network include dial-up connection. In dial-up connection, a connection for performing data-signal communication is established between a computer of an Internet service provider, called a dial-up server serving as an access point (AP) which relays and converts signals, and the processing unit so as to perform data-signal communication over the telecommunication network through the AP (for example, see Patent Document 1). In this case, a point-to-point protocol (PPP) is used, for example. The PPP allows cellular phones and the like to perform data-signal communications. The dial-up connection is used to perform communication using mobile terminals as well.
Patent Document 1: JP 2003-51897 A. As described above, a dial-up connection is generally made through an AP of an Internet service provider, so a user needs to set an AP of the Internet service provider with which the user have a contract, before making a connection. There is a case where anAP is set by the Internet service provider with a dial number for making a dial-up connection, which is determined for eachAP. However, for example, in 3G specifications, which are specifications for third-generation technology of mobile phones, there is a case where an AP to a telecommunication network such as a packet switched network is specified with an access point name (APN). The APN is a parameter used by a mobile terminal in making a packet connection to specify, for a packet switched network, a network to be connected.

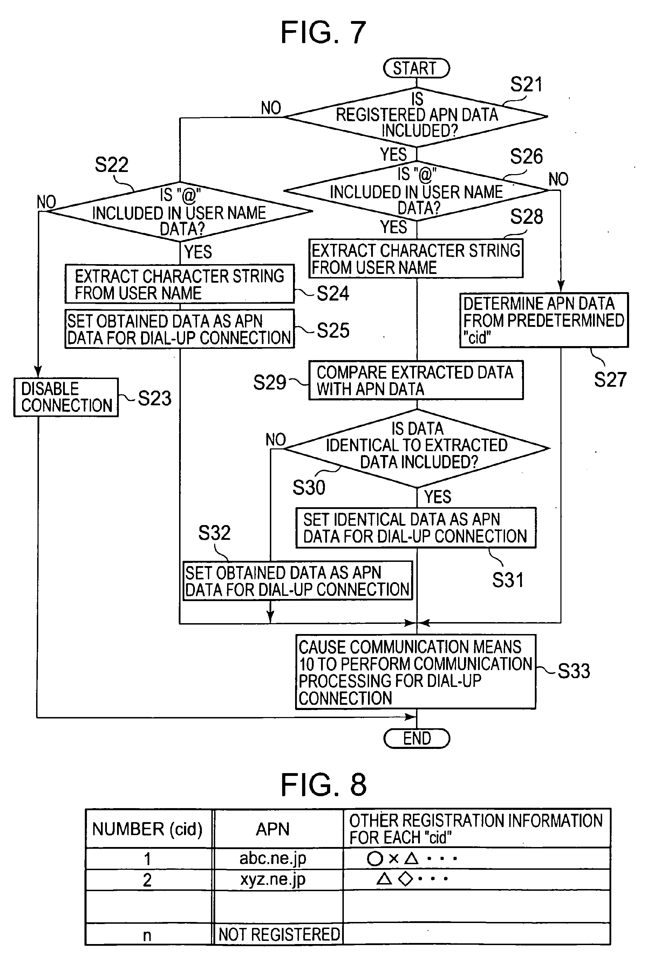

According to the 3G specifications, an APN needs to be registered in the mobile terminal in advance. The area for registering an APN is called PDP-Context. FIG. 8 is an explanatory diagram of the PDP-Context. Multiple areas E1 to En are provided in the PDP-Context. In each of the areas E1 to En, an APN and other registration information are registered. A context ID ("cid") is a number for specifying each area.

To specify anAPN, alphanumeric characters are generally inputted. Even when the AP is specified by an APN, it is necessary to set dial information in order to make a dial-up connection. The dial information is set by considering a "cid" in addition to a dial-up number (which is not particularly determined for each AP) . The "cid" is a management number given when anAPN is set and registered. For the setting mentioned above, the user just needs to input setting items using a user interface, and in general, the user instructs to set various types of data without considering an AT command. However, the user has to input all items to be set. When the user performs setting, the computer stores only the dial information and the "cid", and the APN cannot be viewed since the APN is setting information within communication terminal equipment. For this reason, it is necessary to set an APN and a "cid" or the like in consideration of the relationship between the APN and the "cid", which is difficult for users who are not used to setting and inputting, for example.

In addition, there is no user interface for confirming set APN data. For confirmation, the user needs to directly input an AT command to instruct to display the set APN data. Further, only the set APN data can be confirmed.

In general, for dial-up connection using a computer, connection information (dial information and the like) is generated in the computer in advance. When a "cid" is specified, the "cid" needs to be stored together with data of the dial information.

On the other hand, an APN is registered in each of communication terminal equipment and mobile terminals. To specify the APN of communication terminal equipment from a PC, the "cid" of the communication terminal equipment is used. However, even with the same type of communication terminal equipment, individual communication terminal equipment may store a different "cid" which is to be specified, or may not have registered an APN. Therefore, when different communication terminal equipment is used even if the equipment is of the same type, the "cid" and the APN need to be confirmed again or changed, which is troublesome.

### Disclosure of the Invention

Therefore, an object of the present invention is to provide an easy-to-use communication connection supporting method to reduce a load of the user to input setting items for making a connection to a switched network as much as possible.

A communication connection supporting method according to the present invention includes generating access point name (APN) data used by a communication means in making a dial-up connection, based on a character string inputted as a user name.

A communication connection supporting system according to the present invention includes an input means for sending an input signal based on an input of an instruction or an item serving as data; a setting registration means having access point name (APN) data registered therein; and a data processing means for: extracting a character string following "@" from a character string included in data of a user name determined based on the input signal sent from the input means; comparing the extracted character string with a character string of the APN data registered in the setting registration means; when it is determined that the same character string as the extracted character string is included in the character string of the registered APN data, setting the character string as APN data for making a dial-up connection; and causing a communication means to make the dial-up connection based on the data of at least the user name, the APN, and dial information.

The data processing means of the communication connection supporting system according to the present invention causes the communication means to execute, when it is determined that the APN data has not been registered in the setting registration means or a character string that is completely or partially identical to the APN data registered in the setting registration means is not included, the dial-up connection using the extracted character string as new APN data which is used for making the dial-up connection.

The data processing means of the communication connection supporting system according to the present invention causes the communication means to execute, when it is determined that the same character string as the extracted character string is not included in the APN data registered in the setting registration means, the dial-up connection using the extracted character string as new APN data which is used for making the dial-up connection, and causes the setting registration means to register the new APN data (and in addition, new cid data corresponding to the new APN data, in some cases) therein.

The data processing means of the communication connection supporting system according to the present invention, when it is determined that a character string identical to the extracted character string is not included in a character string of the registered APN data, determines whether a character string indicating a subdomain is included based on the number of dots "." included in the extracted character string; and, when it is determined that a character string indicating a subdomain is included, sets the extracted character string as new APN data which is used for making a dial-up connection after deleting the character string indicating the subdomain.

The communication connection supporting system according to the present invention further includes a display means for performing display based on a display signal. The data processing means sends, in response to the input signal sent from the input means, the display signal for causing display based on one or more pieces of APN data registered in the setting registration means (and in addition, cid data, in some cases), to the display means.

A program of a communication connection supporting method according to the present invention causes a processing means such as a computer to execute the steps of: extracting a character string following "@" from a character string that constitutes data of a user name; comparing the extracted character string with a character string of access point name (APN) data registered in a setting registration means, and when it is determined that the same character string as the extracted character string is included in the character string of the registeredAPN data, setting the character string as APN data which is used for making a dial-up connection; and causing a communication means to make a dial-up connection based on the data of at least the user name, the APN, and dial information.

The program of a communication connection supporting method according to the present invention further causes a processing means such as a computer to execute the step of, when the APN data has not been registered in the setting registration means or when a character string that is completely or partially identical to the APN data registered in the setting registration means is not included, causing the communication means to make the dial-up connection using the extracted character string as new APN data which is used for making the dial-up connection.

A program of a communication connection supporting method according to the present invention further causes a processing means such as a computer to execute the step of, when it is determined that the same character string as the extracted character string is not included in the APN data registered in the setting registration means, causing the communication means to make the dial-up connection using the extracted character string as new APN data which is used for making the dial-up connection, and causing the setting registration means to register the new APN data (and in addition, new cid data corresponding to the newAPN data, in some cases) therein.

The program of a communication connection supporting method according to the present invention causes a processing means such as a computer to execute, when it is determined that a character string identical to the extracted character string is not included in a character string of the registeredAPN data, determining whether a character string indicating a subdomain is included based on the number of dots "." included in the extracted character string, and, when it is determined that a character string indicating a subdomain is included, setting the extracted character string as new APN data which is used for making the dial-up connection after deleting the character string indicating the subdomain..

The program of a communication connection supporting method according to the present invention causes a processing means such as a computer to execute, when the extracted character string is compared with the registered character string, determining whether a character string indicating a subdomain is included based on the number of dots "." included in the extracted character string, and, when it is determined that a character string indicating a subdomain is included, comparing the extracted character string with the registered character string after deleting the character string indicating the subdomain.

The program of a communication connection supporting method according to the present invention causes a processing means such as a computer to execute the steps of: causing a display means to perform display based on one or more pieces of access point name (APN) data registered in a setting registration means; and causing a communication means to make a dial-up connection using data determined based on an APN selected fromAPNs displayed on the display means.

### Brief Description of the Drawings

FIG. 1 is a configuration diagram of a system realizing a communication connection supporting method according to a first embodiment of the present invention.
FIG. 2 is a diagram showing a process flow of a data processing means 1.
FIG. 3 shows a screen displayed on a display means 2.
FIG. 4 shows a screen displayed on the display means 2 when a subdomain is inputted.
FIG. 5 is a diagram showing a process flow of a data processing means 1 according to a third embodiment.
FIG. 6 shows screens displayed on a display means 2 according to the third embodiment of the present invention.
FIG. 7 is a diagram showing a process flow of a data processing means 1 according to an eighth embodiment.
FIG. 8 is an explanatory diagram of PDP-Context.

### Best Mode for carrying out the Invention

### First Embodiment

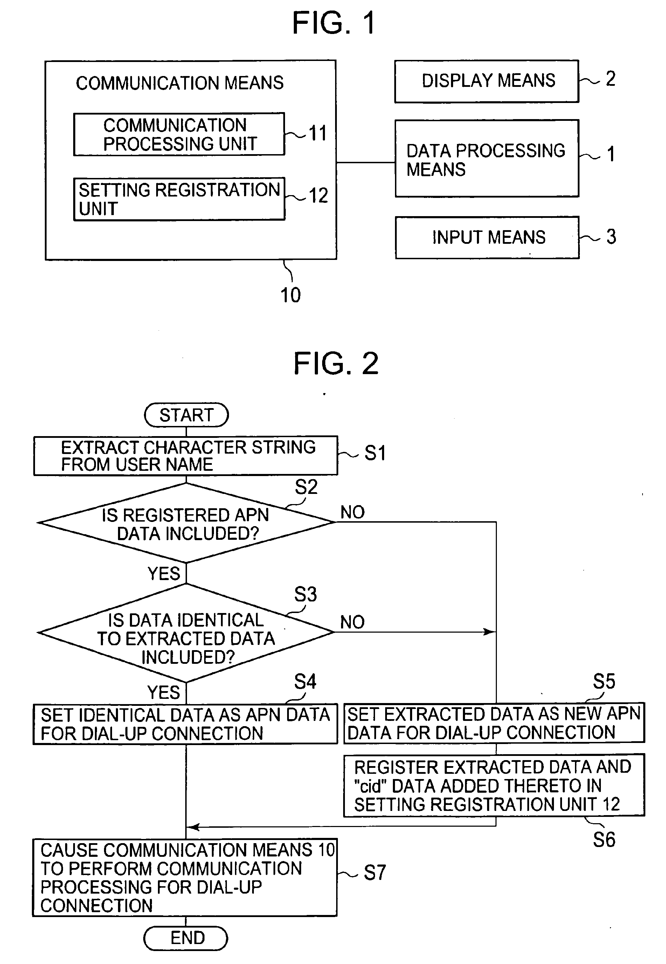

FIG. 1 is a configuration diagram of a system realizing a communication connection supporting method according to a first embodiment of the present invention. The system shown in FIG. 1 includes means that receives communication connection support and means that performs communication connection support and data-signal communication. In order to perform data-signal communication, a data processing means 1, which performs communication connection support, applies data processing to an inputted item and causes a communication means 10 to perform communication processing for a dial-up connection. When the dial-up connection is established, the data processing means 1 performs processing for performing data-signal communication over a network via the communicationmeans 10. Further, thedataprocessingmeans 1 controls eachmeans included in a device. A display means 2 is, for example, a liquid crystal display device performs display based on a display signal sent from the data processing means 1. An input means 3 is a keyboard, buttons, or the like used to input an instruction or an item serving as data, and sends a signal corresponding to an instruction or an item inputted by the user (setter) to the data processing means 1.

The communication means 10, which receives communication connection support, makes a dial-up connection by performing communication processing based on various types of data such as data generated through processing of the data processing means 1 and data corresponding to an item inputted through the input means 3. The communication means 10 of this embodiment includes at least a communication processing unit 11 and a setting registration unit 12. The communication processing unit 11 performs processing for transmitting and receiving a signal as in the modem described above. When the communication means 10 performs data-signal communication through wireless communication, the communication processing unit 11 needs to have an antenna (not shown) and a function and means for allowing wireless communication. The communication means 10 includes the setting registration unit 12 having the above-mentioned PDP-Context in which APN data is registered, and registers (stores), for example, data such as APN data which has previously been specified. In this embodiment, the setting registration unit 12 is included in the communication means 10. However, the communication means 10 and the setting registration unit 12 may be provided separately.

When the communication means 10 is included in card-type casing, for example, a data signal can be transmitted to and received from the data processing means 1 through, for example, an external terminal exposed to the outside of the casing. In this case, the communication means 10 is detachably attached to the data processing means 1. The data processing means 1, the display means 2, the input means 3, and the communication means 10 may constitute one product such as a cellular phone.

This embodiment relates to connection support formaking a dial-up connection. For example, there is a case where APN setting is required for making a dial-up connection. In a user name (user ID) of "aaa@bbbb.cc.dd", which is assigned to identify a user, the APN basically corresponds to a character string of "bbbb.cc.dd" following "@". According to this embodiment, a user name inputted through the input means 3 is analyzed, a character string following "@" of the user name is automatically extracted, and an identical character string is retrieved from character string data registered as APN data in the setting registration unit 12. When an identical character string is found, it is used as APN data. The communication means 10 performs communication processing based on various types of data, including the APN data, necessary for making a dial-up connection. In this case, since the APN is identified by the user name, it is not particularly necessary to include the "cid" in the dial information in order to make a dial-up connection as in the conventional technique. Therefore, it is possible to make a dial-up connection without using the "cid" as data. Since the data processing means 1 performs the above-mentioned processing, the input load of the user can be reduced as much as possible.

When it is judged as a result of the retrieval that an identical character string has not been registered in the setting registration unit 12, the extracted data is directly used as APN data for communication processing and is registered in the setting registration unit 12. When the APN data is registered, a "cid", which is amanagement number for managing theAPN, maybe automatically added so as to associate the "cid" data and the APN (extracted character string) data.

FIG. 2 is a diagram showing a process flow of the data processing means 1. Next, a description is given of a communication connection supporting method according to this embodiment. The data processing means 1 may be configured by only hardware for performing communication connection support. However, in this embodiment, the data processing means 1 is configured by, as a physical means, a general-purpose arithmetic and control means (computer) that includes a central processing unit (CPU), for example, and is also configured by software, firmware, or the like having aprogramcreated in advance of a processing procedure executed by the data processing means 1 as communication connection support. The arithmetic and control means executes the program to perform processing based on the program, thereby realizing communication connection support processing of the data processing means 1.

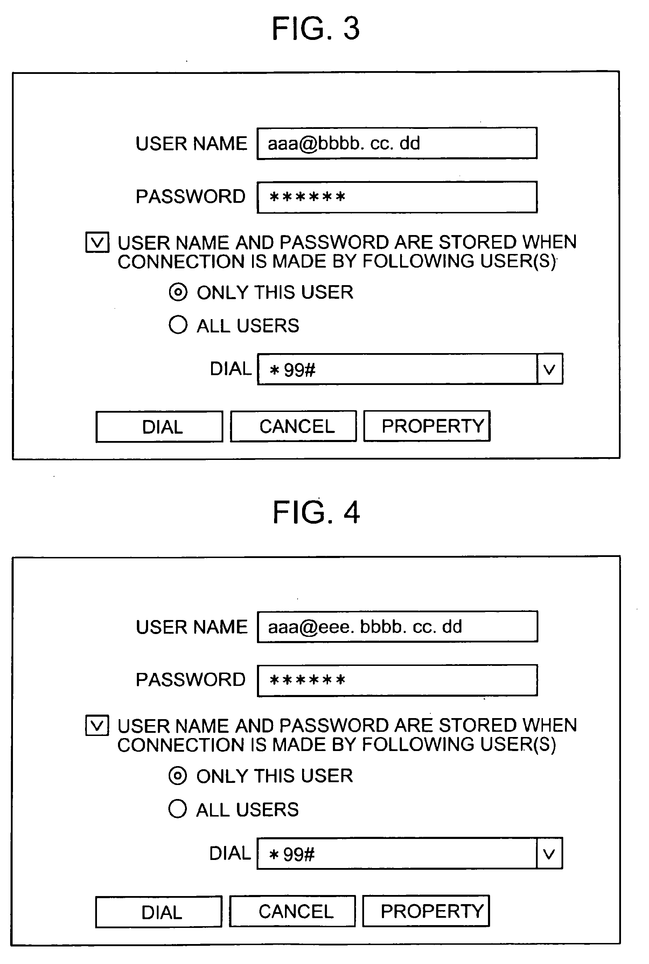

FIG. 3 shows a screen displayed on the display means 2. First, the data processing means 1 causes the display means 2 to perform display for prompting the user to input a user name, a password (which is not always necessary as data used for connection support in this embodiment, but is a necessary item in general), and dial information (for example, "*99#" of FIG. 3). As shown in FIG. 2, display may be performed in the form of a dialogue, for example. In some cases, a user name, a password, and a dial number that are lastly or previously inputted may be displayed so as to allow the user to determine whether to perform communication based on the displayed information. When a user name is inputted by the user through the input means 3, the data processing means 1 finds "@" in "aaa@bbbb.cc.dd" based on the inputted user name data and extracts only a character string of "bbbb.cc.dd" following "@" (S1).

It is determined whether APN data has been registered in the setting registration unit 12 prior to this processing (S2). When it is determined that APN data has been registered, it is determined whether character string data identical to the extracted data is included in the registered APN data (S3). When it is determined that identical character string data is included, the identical character string data is set as APN data used for dial-up connection (S4).

On the other hand, when it is determined that APN data has not been registered in the setting registration unit 12 or that character string data identical to the extracted data has not been registered in the setting registration unit 12, the extracted character string data is set as new APN data for dial-up connection (S5). Further, numeric data which does not correspond to the "cid" associated with APN data which has been registered in the setting registration unit 12 is automatically added as "cid" data so as to associate with the extracted data (new APN data) , and is registered in the setting registration unit 12 (S6).

The communication means 10 performs communication processing based on thus obtained data of the user name, the password, the APN, and the dial to make a dial-up connection (S7).

As described above, according to the first embodiment, since the data processing means 1 generates APN data based on the user name inputted by the user through the input means 3, the user neither needs to input the APN nor needs to input the dial information by considering the "cid", thereby reducing the input load of the user.

Second Embodiment FIG. 4 shows a screen displayed on the display means 2 when a subdomain is inputted. As shown in FIG. 4, there is a case where a so-called subdomain is included in a character string following "@" of the user name inputted by the user. In "bbbb.cc.dd", "cc" is called a subdomain of "dd" in some cases. In this embodiment, however, the subdomain corresponds to "eee" of "eee.bbbb.cc.dd", which is added to subdivide a domain of "bbbb.cc.dd". It is generally considered that a character string of a subdomain is hardly used as a part of an APN.

In S3 of the first embodiment, it is determined whether character string data identical to the extracted data has been registered in the setting registration unit 12. This character-string matching may be determined with complete matching. However, in this embodiment, in consideration of the case of including a subdomain in an inputted user name, it is determined that matching occurs when the extracted data is partially identical to character string data registered as APN data, from the first to third levels (to a part of "bbbb" of "eee.bbbb.cc.dd"). Under this condition, it is possible to make a dial-up connection with proper APN data even when a subdomain is included in an inputted user name.

### Third Embodiment

In the second embodiment, in order to make a dial-up connection with a user name that includes a subdomain, character string data that is partially identical to the extracted character string data needs to be registered as APN data in the setting registration unit 12 in some way. In this embodiment, in addition to the processing of the first embodiment, the data processing means 1 further determines whether a subdomain is added. When it is determined that a subdomain is added, the data processing means 1 generates APN data by deleting the subdomain.

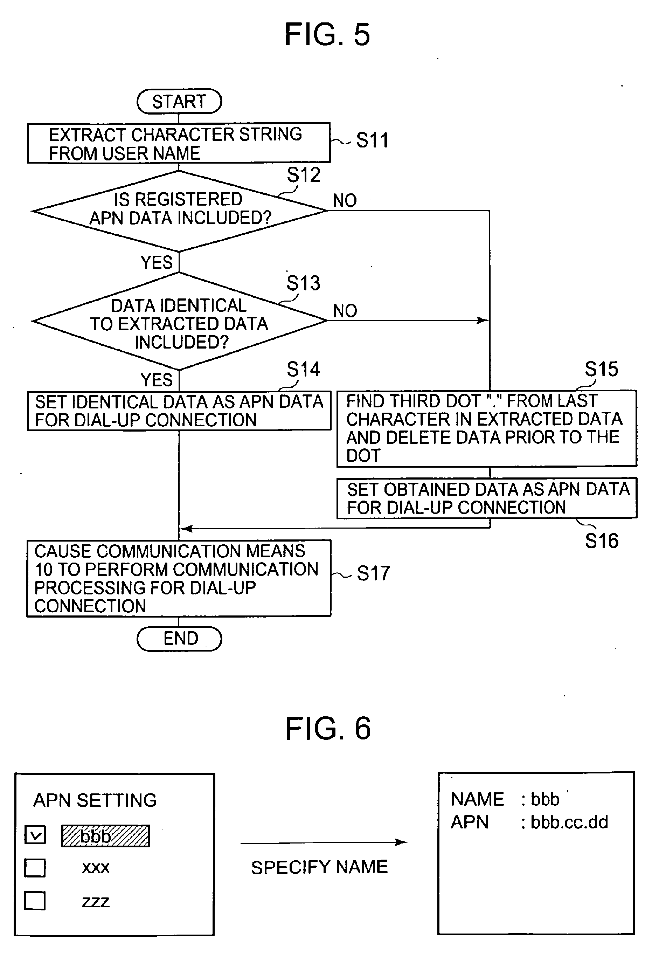

FIG. 5 is a diagram showing a process flow of the data processing means 1 according to a third embodiment. Next, a description is given of a communication connection supporting method of this embodiment. A system configuration of this embodiment is the same as that of FIG. 1. Processing of the data processing means 1 is a little different from that described in the first embodiment. However, identical reference symbols are given in this embodiment.

The data processing means 1 performs the same processing as in S1 and S2 described in the first embodiment. Specifically, the data processing means 1 extracts a character string following "@" (in this case, "eee.bbbb.cc.dd"), and determines whether APN data has been registered in the setting registration unit 12 prior to this processing (S11, S12).

When it is determined that APN data has been registered, it is determined whether character string data that is identical (in this case, partially identical) to the extracted data, from the first to third levels, is included in the registered APN data (S13). When it is determined that such character string data is included, APN data used for dial-up connection is generated from the character string data (S14).

On the other hand, when it is determined that APN data has not been registered in the setting registration unit 12 or that character string data identical to the extracted data is not included in the setting registration unit 12, the third dot "." from the last dot, for example, is found in the extracted data (S15). Then, data identical to "bbbb.cc.dd" which is obtained by deleting a character string of "eee." prior to the dot is set as APN data for dial-up connection (in this case, when the extracted data includes two dots "." or less, the extracted data is set as APN data as it is) (S16).

The communication means 10 performs communication processing based on thus obtained data of the user name, the password, the APN, and the dial information to make a dial-up connection (S17).

As described above, according to the third embodiment, even in the case where a subdomain is added to a user name, the data processing means 1 sets APN data after deleting the subdomain. Therefore, a dial-up connection can be made without causing the user to input the APN and the "cid", thereby reducing the input load of the user. The determination of S13 is made with partial matching. However, even if the determination of Step S13 is made with complete matching, for example, proper APN data is generated through Steps S15 and S16. Before the determination of Step S13 is made, the data processing means 1 may determine whether the extracted data includes a character string of a subdomain and delete a character string of a subdomain when included.

### Fourth Embodiment

FIG. 6 shows screens displayed on the display means 2 according to a fourth embodiment of the present invention. In response to an APN display instruction inputted by the user through the input means 3, the data processing means 1 causes the display means 2 to display the APN corresponding to APN data registered in the setting registration unit 12. The display means 2 may display the "cid". In FIG. 6, the names corresponding to APN data are displayed, and when a certain name is specified, the name and the APN are displayed.

Then, the user is allowed to make a selection based on the APNs displayed on the display means 2 through the input means 3. When the selected APN is associated with data, such as the user name, the password, and the dial information, the data processing means 1 can cause the communication means 10 to perform communication processing. As described above, through selection based on the APN displayed on the display means 2, it is possible to not only confirm the APN but also make a dial-up connection.

According to the fourth embodiment, since the APN is expresslydisplayed on the display means 2 based onAPN data registered in the setting registration unit 12, confirmation of the APN can be performed. Further, since the user can specify an APN to be used for dial-up connection based on display of the display means 2 through the input means 3, a change in APN can easily be performed.

### Fifth Embodiment

Although not particularly mentioned in the above embodiments, it may be considered that a plurality of "@" are included in a user name. In this case, the last "@" included in the user name inputted by the user is found, and APN data is set based on a character string following the last "@".

### Sixth Embodiment

In the above embodiments, the setting registration unit 12 has APN data that has previously been registered by the user. However, registering APN data is not limited to this. For example, a plurality of pieces of APN data may be registered in advance to be desirably used when making a connection. The APN data and the "cid" data may be registered in an association manner.

### Seventh Embodiment

In the above embodiments, since the APN can be identified by user name data, it is not particularly necessary to include a "cid" in dial information. Even an APN is identified by the method of the above embodiments, when APN data and "cid" data are registered in an association manner, it is also possible to generate dial information that includes the dial number and the "cid" as in the conventional technique and use the dial information in making a dial-up connection. Even in this case, in addition to the APN, the "cid" data which is associated with the APN is also identified by a user name, so the user does not have to input the "cid" when inputting dial information. Therefore, items to be inputted by the user are reduced.

### Eighth Embodiment

FIG. 7 is a diagram showing a process flow of the data processing means 1 according to an eighth embodiment. Hereinafter, a description is given of a communication connection supportingmethod according to this embodiment. Processing of the data processing means 1 is a little different from that described in the first embodiment. However, identical reference symbols are given in this embodiment.

When the user inputs user name data and issues an instruction to make a dial-up connection, the data processing means 1 determines whether APN data has been registered in the setting registration unit 12 prior to this processing (S21). When it is determined that APN data has not been registered, it is further determined whether the user name data includes "@" (S22). When "@" is not included, the data processing means 1 determines that a dial-up connection cannot be made (S23) and finishes this processing. When "@" is included, the data processing means 1 extracts a character string following "@" (S24) and generates APN data from the extracted data (S25).

On the other hand, when it is determined that APN data has been registered, it is further determined whether the user name data includes "@" (S26). When "@" is not included, the data processing means 1 selects a predetermined "cid" (S27), and sets APN data associated with the "cid" data, as APN data to be used for dial-up connection. In this case, when the predetermined "cid" is omitted, "cid-1" is used in accordance with the command specifications.

When it is determined that the user name data includes "@", the data processing means 1 extracts a character string following "@" (S28) and compares the extracted character string data with the APN data registered in the setting registration unit 12 irrespective of a specified "cid" (S29). Then, it is determined whether character string data identical to the extracted data is included in the APN data registered in the setting registration unit 12 (in this case, in consideration of subdomain, the matching is determined with not only complete matching but also partial matching) (S30).

When it is determined that such identical character string data has been registered, the identical character string data is set as APN data used for dial-up connection (S31). When it is determined that character string data identical to the extracted data has not been registered in the setting registration unit 12, the extracted character string data is set as APN data (S32).

The communication means 10 performs communication processing based on thus obtained data of the user name, the password, the APN, and the dial to make a dial-up connection (S33).

As described above, according to the eighth embodiment, when it is determined that identical APN data is included in the APN data registered in the setting registration unit 12 based on the user name inputted by the user through the input means 3, the data processing means 1 uses the APN data for dial-up connection performed by the communication means 10. When APN data has not been registered or when identical APN data is not included, the data processing means 1 generates APN data from the user name data, for dial-up connection performed by the communication means 10. Therefore, the user neither needs to input the APN nor needs to input the dial information by considering a "cid", thereby reducing the input load of the user. Further, since whether character string data identical to extracted data has been registered in the setting registration unit 12 is determined with partial matching, dial-up connection can be made even when a character string of a subdomain is included in user name data.

Under the present circumstances in which "@" is always included in an account, it is also possible to employ, in the above embodiments, a configuration in which after a user name is inputted by the user through the input means 3, the data processing means determines, prior to determination of whether APN data has been registered, whether "@" is included in the inputted user name, and does not make a dial-up connection when "@" is not included.

### Industrial Applicability

As described above, according to the present invention, since APN data used when the communication means makes a dial-up connection is generated based on a character string inputted as a user name, the user neither needs to input the APN nor needs to input the dial information by considering a "cid", but the "cid" is automatically included in the APN data and the dial information data, thereby reducing the input load of the user. Further, since the APN data registered at this time is compared or consulted, the registered APN data can be effectively used.

Even if a subdomain is included in a user name, when APN data for dial-up connection is generated by deleting the subdomain, the user does not needs to consider the subdomain to obtain the APN data, thereby further reducing the input load of the user. The display means expressly displays the APN based on the APN data registered in the setting registration means, so the user can confirm the registered APN with ease. Further, when the displayed APN can be selected, dial-up connection can be easily made.

## Claims

1. A communication connection supporting method, comprising generating access point name (APN) data used by a communication means in making a dial-up connection, based on a character string inputted as a user name.

2. A communication connection supporting system, comprising:
an input means for sending an input signal corresponding to an input of an instruction or an item serving as data;
a setting registration means having access point name (APN) data registered therein; and
a data processing means for: extracting a character string following "@" from a character string included in data of a user name determined based on the input signal sent from the input means; comparing the extracted character string with a character string of the APN data registered in the setting registration means; when it is determined that the same character string as the extracted character string is included in the character string of the registered APN data, setting the character string as APN data for making a dial-up connection; and causing a communication means to make the dial-up connection based on the data of at least the user name, the APN, and dial information.

3. A communication connection supporting system according to claim 2, wherein the data processing means causes the communication means to execute, when it is determined that the APN data has not been registered in the setting registration means or a character string that is completely or partially identical to the APN data registered in the setting registration means is not included, the dial-up connection using the extracted character string as new APN data which is used for making the dial-up connection.

4. A communication connection supporting system according to claim 2, wherein the data processing means causes the communication means to execute, when it is determined that the same character string as the extracted character string is not included in the APN data registered in the setting registration means, the dial-up connection using the extracted character string as new APN data which is used for making the dial-up connection, and causes the setting registration means to register the new APN data therein.

5. A communication connection supporting system according to claim 4, wherein the data processing means, when it is determined that a character string identical to the extracted character string is not included in a character string of the registered APN data, determines whether a character string indicating a subdomain is included based on the number of dots "." included in the extracted character string; and, when it is determined that a character string indicating a subdomain is included, sets the extracted character string as new APN data which is used for making a dial-up connection after deleting the character string indicating the subdomain.

6. A communication connection supporting system according to any one of claims 2, 3, 4, and 5, further comprising a display means for performing display based on a display signal,
wherein the data processing means sends, in response to the input signal sent from the input means, the display signal for causing display based on one or more pieces of APN data registered in the setting registration means, to the display means.

7. A program of a communication connection supporting method, which causes a computer to execute the steps of:
extracting a character string following "@" from a character string that constitutes data of a user name;
comparing the extracted character string with a character string of access point name (APN) data registered in a setting registration means, and when it is determined that the same character string as the extracted character string is included in the character string of the registered APN data, setting the character string as APN data which is used for making a dial-up connection; and
causing a communication means to make a dial-up connection based on the data of at least the user name, the APN, and dial information.

8. A program of a communication connection supporting method according to claim 7 which further causes a computer to execute the step of, when the APN data has not been registered in the setting registration means or when a character string that is completely or partially identical to the APN data registered in the setting registration means is not included, causing the communication means to make the dial-up connection using the extracted character string as new APN data which is used for making the dial-up connection.

9. A program of a communication connection supporting method according to claim 7, which further causes a computer to execute the step of, when it is determined that the same character string as the extracted character string is not included in the APN data registered in the setting registration means, causing the communication means to make the dial-up connection using the extracted character string as new APN data which is used for making the dial-up connection, and causing the setting registration means to register the new APN data therein.

10. A program of a communication connection supporting method according to claim 9, which causes a computer to execute, when it is determined that a character string identical to the extracted character string is not included in a character string of the registered APN data, determining whether a character string indicating a subdomain is included based on the number of dots ". " included in the extracted character string, and, when it is determined that a character string indicating a subdomain is included, setting the extracted character string as new APN data which is used for making the dial-up connection after deleting the character string indicating the subdomain.

11. A program of a communication connection supporting method according to claim 7 or 9, which causes a computer to execute, when the extracted character string is compared with the registered character string, determining whether a character string indicating a subdomain is included based on the number of dots "." included in the extracted character string, and, when it is determined that a character string indicating a subdomain is included, comparing the extracted character string with the registered character string after deleting the character string indicating the subdomain.

12. A program of a communication connection supporting method, which causes a computer to execute the steps of:
causing a display means to perform display based on one or more pieces of access point name (APN) data registered in a setting registration means; and
causing a communication means to make a dial-up connection using data determined based on an APN selected from APNs displayed on the display means.
